# FASCICULE DE BREVET EUROPEEN

(11) **EP 2 201 873 B1**
(45) Date de publication et mention de la délivrance du brevet: **03.07.2013**
(21) Numéro de dépôt: 09306226.3
(22) Date de dépôt: 14.12.2009
(51) Int. Cl.: A47J 36/20, A47J 27/082

(54) **Panier de cuisson d'aliments et systeme de cuisson correspondant**
Kochbehälter und entsprechendes Kochsystem
Cooking basket and related cooking system

(30) Priorité: 23.12.2008 FR 0859044
(43) Date de publication de la demande: 30.06.2010
(73) Titulaire: SEB S.A., 69130 Ecully (FR)
(72) Inventeur: Cohade, Guillaume, 21000 Dijon (FR); Rocca, Richard, 06200 Nice (FR)
(74) Mandataire: Weber, Jean-François

(56) Documents cités:
- WO-A-2006/111838
- FR-A- 2 324 266
- US-A- 5 584 235

## Description

La présente invention se rapporte au domaine technique général de la cuisson d'aliments dans une atmosphère chargée en vapeur, par exemple au moyen d'un cuiseur vapeur ou d'un autocuiseur, et plus particulièrement aux paniers de cuisson d'aliments qui sont destinés à être mis en place dans ces appareils pour assurer la cuisson des aliments.

La présente invention concerne ainsi un panier de cuisson d'aliments pour appareil de cuisson conçu pour cuire les aliments dans une atmosphère chargée en vapeur, ledit panier comprenant un fond perméable à la vapeur et une paroi latérale annulaire supérieure s'étendant vers le haut à partir dudit fond pour former avec ce dernier un récipient d'accueil desdits aliments.

La présente invention concerne également un système de cuisson comprenant d'une part un appareil de cuisson conçu pour cuire des aliments dans une atmosphère chargée en vapeur et d'autre part un panier de cuisson d'aliments comprenant un fond perméable à la vapeur et une paroi latérale annulaire supérieure s'étendant vers le haut à partir dudit fond pour former avec ce dernier un récipient d'accueil desdits aliments.

Pour permettre à l'utilisateur d'un autocuiseur de réaliser la cuisson d'aliments autrement que par simple immersion des aliments dans le liquide contenu dans la cuve de cuisson, il est nécessaire de prévoir d'intégrer dans la cuve un panier de cuisson contenant les aliments, ainsi que des moyens de support du panier de cuisson ménagés dans ou à partir des parois et à une certaine hauteur prédéterminée, de manière à permettre de supporter le panier à une hauteur prédéterminée au-dessus du liquide de cuisson.

Il est également nécessaire de prévoir un certain nombre de perforations dans le panier, de manière à permettre la circulation de la vapeur non seulement dans l'enceinte de l'autocuiseur, mais également à travers les aliments, de manière à favoriser un échange de chaleur optimal.

De tels systèmes sont largement connus et mettent en oeuvre des paniers, généralement métalliques, de forme et de contenance diverses, les moyens de support des paniers étant constitués d'un support amovible, réalisé par exemple à partir d'un fil d'acier mis en place sur le fond de la cuve lorsque l'utilisateur veut réaliser une cuisson à la vapeur. Il existe également des moyens de support formés par des pièces rapportées sur la paroi de la cuve (rivets) ou par des déformations localisées de la paroi de la cuve, ces déformations supportant le panier à une hauteur prédéterminée du fond de la cuve.

Les paniers métalliques connus à ce jour peuvent être regroupés en deux types principaux.

Le premier type est formé par des paniers dits « *filets* » obtenus à l'aide de fils d'acier entrelacés ou maillés et pourvus d'une structure de rigidification leur permettant une certaine tenue mécanique. De tels paniers donnent généralement satisfaction, mais souffrent d'inconvénients liés à la difficulté de contenir les aliments en raison du large maillage et à leur grande difficulté de nettoyage, en raison précisément du maillage qui nuit notamment à une bonne évacuation des déchets d'aliments. Par ailleurs, la durée de vie de tels paniers est réduite en raison de leur relative fragilité.

Le second type de paniers connus est formé par des paniers métalliques obtenus par emboutissage et comportant une série de perforations ménagées soit au fond du panier, soit au fond et à travers les parois latérales.

Ces paniers donnent généralement satisfaction et sont d'une nettoyabilité acceptable. En revanche, leur capacité à assurer un bon échange de chaleur avec les aliments est éminemment variable et difficilement maîtrisée et maîtrisable.

On sait par ailleurs qu'une alimentation équilibrée nécessite un apport régulier de vitamines, en particulier de vitamine C, à partir de fruits et légumes qui en sont les sources principales. Or, il apparaît que les études effectuées sur ce sujet ont montré non seulement un niveau de consommation de fruits et légumes insuffisant dans la population au cours des dernières années, mais encore une tendance générale exprimant une baisse relative de cette consommation. Parmi les facteurs pouvant expliquer ce faible niveau de consommation et cette tendance générale, on note, chez le consommateur potentiel, l'existence d'une série de contraintes d'usage tendant à limiter la consommation des fruits et légumes, à savoir: la nécessité d'un approvisionnement fréquent, la nécessité d'un nettoyage, voire d'un épluchage, et enfin la nécessité d'avoir recours à une opération de cuisson pour les légumes, étant entendu que cette dernière contrainte, perçue négativement, est une contrainte de durée de cuisson.

Il existe donc de manière générale un besoin participant à l'amélioration des conditions générales d'alimentation, ou du moins à leur absence de dégradation, conduisant à rechercher des solutions permettant de réduire le temps de cuisson des aliments, et notamment des légumes. Par ailleurs, on sait également que les vitamines sont très sensibles aux conditions de cuisson, et peuvent être détruites en tout ou partie, lessivées, voire dégradées, au cours de cette opération. Parmi l'ensemble des vitamines, la vitamine C est la plus fragile, alors même que les fruits et légumes contribuent pour environ 85 % aux apports nutritionnels en vitamine C.

Le maintien d'un taux de vitamine C dans les légumes à l'issue d'une opération de cuisson, notamment sous pression, s'avère donc un problème extrêmement important.

Parmi les phénomènes de fragilité à la cuisson connus pour la vitamine C contenue dans les légumes, on peut rappeler que cette dernière est hydrosoluble lorsqu'elle est sous la forme de folates, ce qui la rend sensible au lessivage par l'eau de cuisson. Par ailleurs, la vitamine C est sensible à la chaleur et sera détruite de manière proportionnelle au couple temps / température appliqué lors de la cuisson. Enfin, la vitamine C est sensible à l'oxydation et sera donc d'autant plus dégradée qu'elle sera mise au contact de l'air. Il existe donc également un problème général de préservation des vitamines, notamment de la vitamine C, lors de la cuisson des légumes dans des appareils de cuisson en ambiance vapeur, et tout particulièrement dans les appareils de cuisson sous pression tels que les autocuiseurs.

Afin de répondre à ce problème général, il a été proposé par la demanderesse un panier entièrement perforé qui correspond au préambule de la revendication 1 annexée et qui est décrit dans la demande de brevet français publiée sous le numéro FR-2 832 613. Ce panier a permis un progrès notable en matière de réduction du temps de cuisson et de préservation des vitamines. Ce panier a par la suite été lui-même amélioré, en supprimant l'essentiel des perforations de son fond, de façon que ledit fond soit sensiblement plein, seule une couronne périphérique étroite dudit fond restant perforée, de même que la paroi latérale du panier. Ce panier amélioré permet d'obtenir des résultats remarquables en matière de réduction du temps de cuisson et de préservation des vitamines.

Il n'en reste pas moins qu'il peut toutefois être encore optimisé de ce point de vue, en vue de réduire encore le temps de cuisson et d'améliorer encore la préservation des vitamines.

En outre, il est nécessaire de réaliser des déformations locallsées de la paroi de la cuve de l'autocuiseur pour supporter ce panier de l'art antérieur à une hauteur prédéterminée du fond de la cuve, pour éviter que les aliments ne baignent dans le liquide présent dans la cuve. La réalisation de telles déformations localisées, bien que particulièrement simple, constitue toutefois une contrainte industrielle supplémentaire et affecte l'esthétique générale de la cuve.

On connaît par ailleurs du document WO-2006/111838 un panier en matériau élastomère pourvu d'un pied en forme d'anneau ondulé.

Les objets assignés à l'invention visent en conséquence à remédier aux différents inconvénients énumérés précédemment, et à proposer un nouveau panier de cuisson d'aliments en ambiance vapeur, qui permette de réduire le temps de cuisson des aliments tout en préservant les vitamines présentes dans les aliments, notamment les légumes, et qui soit particulièrement simple à installer dans n'importe quel appareil de cuisson.

Un autre objet de l'invention vise à proposer un nouveau panier de cuisson d'aliments de construction particulièrement simple et bon marché.

Un autre objet de l'invention vise à proposer un nouveau panier de cuisson d'aliments qui permet de favoriser le flux de vapeur au sein des aliments et permettre une montée en température plus rapide.

Un autre objet de l'invention vise à proposer un nouveau panier de cuisson d'aliments qui permette d'optimiser la circulation de la vapeur dans l'enceinte de cuisson.

Un autre objet de l'invention vise à proposer un nouveau panier de cuisson d'aliments permettant de réduire la quantité d'énergie nécessaire à la cuisson.

Un autre objet de l'invention vise à proposer un nouveau panier de cuisson d'aliments qui soit particulièrement robuste et facile à fabriquer, tout en étant aisément nettoyable.

Un autre objet de l'invention vise également à proposer un nouveau système de cuisson qui permette de réduire le temps de cuisson des aliments tout en préservant les vitamines présentes dans les aliments.

Un autre objet de l'invention vise à proposer un nouveau système de cuisson de conception et de construction particulièrement simple et bon marché.

Les objets assignés à l'invention sont atteints à l'aide d'un panier de cuisson d'aliments conforme à l'objet de la revendication 1.

Les objets assignés à l'invention sont également atteints à l'aide d'un système de cuisson conforme à l'objet de la revendication 11.

D'autres objets et avantages de l'invention seront explicités plus en détails à la lecture de la description qui suit et des dessins annexés donnés à titre d'exemples illustratifs et non limitatifs dans lesquels :
- La figure 1 illustre, selon une vue en perspective, une première variante de réalisation d'un panier de cuisson conforme à l'invention.
- La figure 2 illustre, selon une vue schématique en coupe, un système de cuisson conforme à l'invention comprenant un autocuiseur au sein duquel est installé un panier conforme à la variante de la figure 1.
- La figure 3 est un graphe illustrant en particulier l'évolution temporelle de la température au coeur d'un amas de haricots verts placé dans un panier conforme à l'invention et dans un panier de l'art antérieur.
- La figure 4 illustre, selon une base comparable au graphe de la figure 3, l'évolution temporelle de la température au coeur d'un amas de brocolis placé dans un panier conforme à l'invention et dans un panier de l'art antérieur.
- La figure 5 illustre, selon une vue en perspective, un deuxième mode de réalisation d'un panier de cuisson conforme à l'invention.
- La figure 6 illustre, selon une vue schématique en coupe, un troisième mode de réalisation d'un panier de cuisson conforme à l'invention.
- La figure 7 illustre, selon une vue schématique en coupe, un quatrième mode de réalisation d'un panier de cuisson conforme à l'invention.

L'invention concerne un panier 1 de cuisson d'aliments 2 pour appareil de cuisson 3 conçu pour cuire lesdits aliments 2 dans une atmosphère chargée en vapeur (appelée communément « *ambiance vapeur* »).

Le panier 1 selon l'invention est destiné à être utilisé et disposé dans tout type d'appareil de cuisson d'aliments en ambiance vapeur, et par exemple dans un cuiseur vapeur opérant sensiblement à la pression atmosphérique, ou de préférence dans un appareil de cuisson d'aliments sous pression, tel qu'un autocuiseur. L'invention concerne donc également en tant que tel un système de cuisson comprenant d'une part un appareil de cuisson 3 conçu pour cuire des aliments 2 dans une atmosphère chargée en vapeur, et de préférence chargée en vapeur d'eau, et d'autre part un panier 1 de cuisson d'aliments 2 conforme à l'invention.

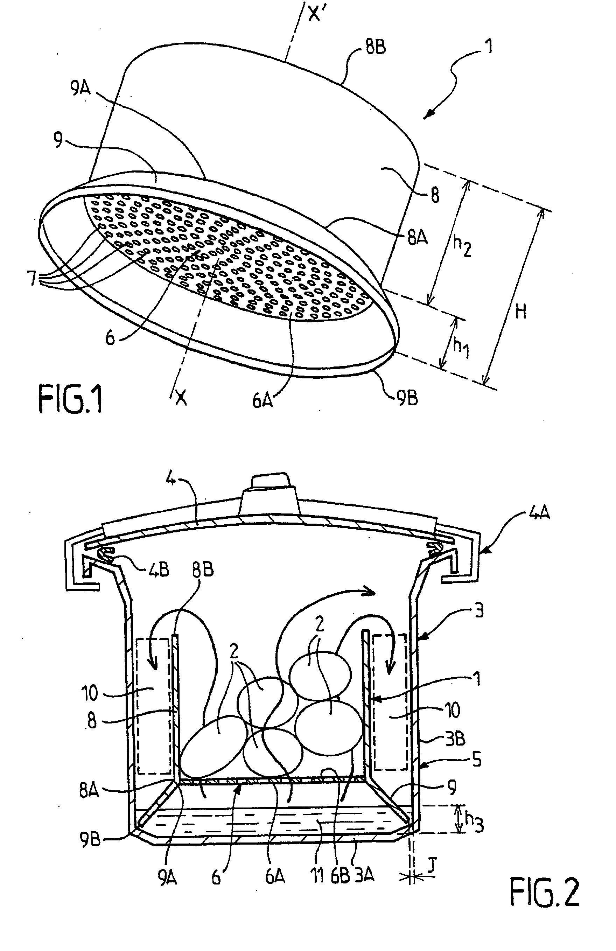

De préférence, le panier 1 de cuisson d'aliments est spécifiquement conçu pour être utilisé et disposé dans un autocuiseur, de sorte qu'il constitue dans ce cas un panier 1 pour autocuiseur. Dans ce cas de figure préférée, le système de cuisson conforme à l'invention comprend donc d'une part un autocuiseur (formant l'appareil de cuisson 3) et d'autre part un panier 1 de cuisson d'aliments 2 conforme à l'invention, ledit panier étant avantageusement distinct et indépendant de la cuve 5 de l'autocuiseur, et étant destiné à être introduit dans la cuve 5 pour reposer, de préférence directement, sur le fond de cette dernière. Il s'avère en effet que des résultats particulièrement remarquables en matière de rapidité de cuisson et de préservation des vitamines peuvent être obtenus à l'aide du panier 1 lorsqu'il est utilisé en conjonction avec un appareil de cuisson d'aliments sous pression, tel qu'un autocuiseur, quel que soit le type de ce dernier (à étriers, à mâchoires, à baïonnettes ou encore à trous d'homme, cette liste n'étant pas exhaustive). Le panier 1 conforme à l'invention s'avère tout particulièrement avantageux lorsqu'il est utilisé dans un autocuiseur opérant à des pressions de cuisson significativement supérieures à la pression atmosphérique, et par exemple excédant cette dernière d'au moins 20 kPa, et de préférence d'au moins 40 kPa. Un tel autocuiseur est pourvu classiquement de moyens de verrouillage 4A de son couvercle 4 sur sa cuve 5, constitués par exemple par un système à mâchoires comme illustré par la figure 2, et est de préférence muni d'un système de régulation de pression, constitué par exemple par une soupape de régulation (non représentée).

Conformément à l'invention, le panier 1 comprend un fond 6, lequel est avantageusement constitué d'une feuille d'un matériau rigide, présentant par exemple une forme sensiblement discoïde. Avantageusement, le fond 6 est réalisé en un matériau rigide susceptible de résister durablement et en continu à l'utilisation dans un appareil de cuisson en ambiance vapeur, et en particulier dans un autocuiseur, nécessitant un contact alimentaire, des phases successives et répétées de nettoyage et des phases de montée en température et en pression. De préférence, le fond 6 est réalisé en acier inoxydable, étant entendu néanmoins que d'autres types de matériaux, et notamment des matériaux plastiques, peuvent être envisagés, sans pour autant sortir du cadre général de l'invention. Le fond 6 peut présenter une forme globale sensiblement plate, c'est-à-dire qu'il peut s'étendre avantageusement dans un plan, mais peut également présenter une forme incurvée, convexe ou concave, ou toute autre forme jugée appropriée en vue de l'usage.

Conformément à l'invention, le fond 6 est perméable à la vapeur, et en particulier à la vapeur d'eau. En d'autres termes, le fond 6 est spécifiquement conçu pour pouvoir être traversé, à travers son épaisseur, par la vapeur. Cela signifie que le fond 6A ne constitue pas une barrière hermétique à la vapeur mais laisse passer la vapeur à travers lui. Une telle perméabilité du fond 6 à la vapeur peut être réalisée par tout moyen connu de l'homme du métier, et par exemple en utilisant un matériau suffisamment poreux pour réaliser le fond 6, ou de préférence en perforant le matériau constituant ledit fond, cette dernière solution étant préférée car elle permet d'obtenir un débit de vapeur à travers le fond 6 le plus élevé possible. Ainsi, dans les modes de réalisation préférentiels illustrés aux figures, le fond 6 est pourvu de perforations 7, lesquelles sont de préférence réparties sensiblement régulièrement à la surface dudit fond 6, c'est-à-dire qu'elles sont distribuées de manière homogène et équilibrée sur toute la surface dudit fond 6.

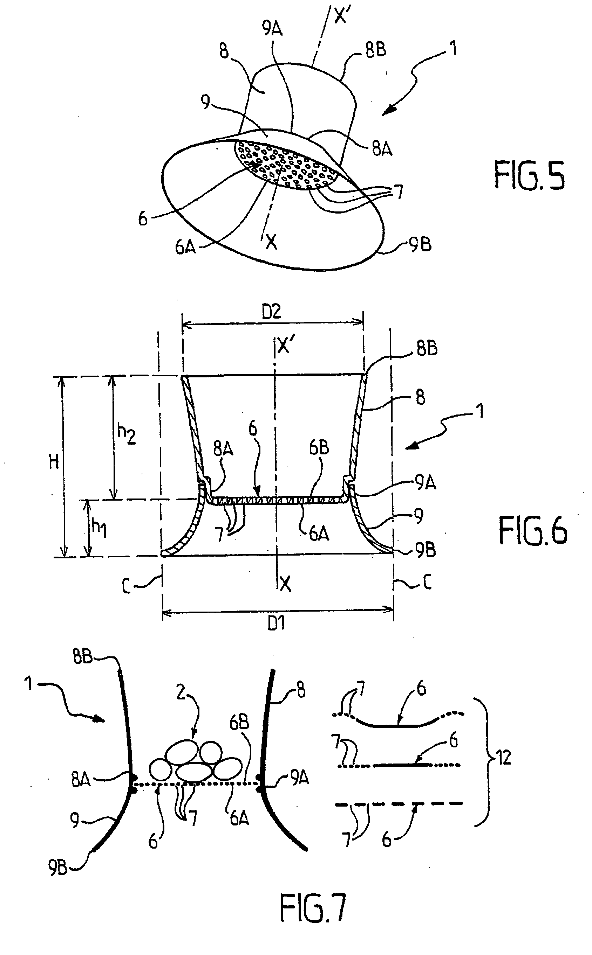

Il est cependant tout à fait envisageable, comme illustré par exemple à la figure 7, que les perforations 7 soient distribuées uniquement de façon localisée sur le fond 6, et par exemple uniquement selon une couronne périphérique, le centre du fond 6 étant plein et sensiblement imperméable à la vapeur. La perméabilité à la vapeur du fond 6 est donc, au sens de l'invention, un caractère global dudit fond 6, ce qui signifie qu'il est tout à fait envisageable, comme exposé dans ce qui précède, que certaines portions du fond 6 soient totalement hermétiques et étanches à la vapeur, l'essentiel étant que la vapeur puisse malgré tout traverser au moins localement le fond 6 de la face inférieure 6A à la face supérieure 6B de ce dernier.

Dans les modes de réalisation préférés illustrés aux figures, le fond 6 est constitué d'une feuille métallique rigide discoïde percée à travers toute son épaisseur d'une pluralité de perforations 7. Il est cependant tout à fait envisageable que le fond 6 présente au contraire un caractère souple, et soit par exemple constitué par un filet réalisé à l'aide de fils en matériau métallique ou plastique. Dans ce cas, les perforations 6 correspondent aux espaces vides (ou mailles) laissés entre les fils constituant le filet en question. Dans d'autres variantes de réalisation, le fond 6 pourra être constitué d'un grillage, d'un treillage ou d'une grille, l'essentiel étant que le fond 6 soit muni d'ouvertures, ou en tout cas présente une perméabilité suffisante, pour laisser passer la vapeur à travers son épaisseur, de sa face inférieure 6A à sa face supérieure 6B.

Avantageusement, les perforations 7, ménagées à travers le fond 6, représentent au moins 30 %, et de préférence au moins 40 %, de la surface totale dudit fond 6. En effet, la performance du panier 1 conforme à l'invention en matière de rapidité de cuisson et de préservation des vitamines augmente avec le degré de perméabilité du fond 6, et donc avec le pourcentage de perforations 7 de ce dernier.

Dans le cas d'un fond 6 constitué par une feuille métallique perforée, un taux de perforation de l'ordre de 30 à 40 % s'avère idéal, la valeur de 40 % permettant en particulier d'obtenir d'excellents résultats. Dans le cas où le fond 6 est constitué par une grille ou un flet réalisé par exemple à partir de fils métalliques, les perforations représentent un pourcentage qui peut être largement supérieur à 40 % de la surface totale du fond 6, ce qui permet d'obtenir d'excellents résultats en matière de réduction du temps de cuisson et de préservation des vitamines. Toutefois, le recours à un filet souple présente un certain nombre d'inconvénients du point de vue de la nettoyabilité du panier 1 et de sa stabilité mécanique au cours du processus de cuisson, en particulier lorsque le panier accueille une masse importante d'aliments. A cet égard, il est particulièrement intéressant que le fond 6 soit plutôt rigide et plat, comme illustré aux figures.

Conformément à l'invention, le panier 1 de cuisson d'aliments 2 comprend également une paroi latérale annulaire supérieure 8 s'étendant vers le haut à partir du fond 6 pour former avec ce dernier un récipient d'accueil desdits aliments 2, comme illustré en particulier aux figures 2 et 7. Avantageusement, comme illustré aux figures, la paroi latérale annulaire supérieure 8 s'élève ainsi à partir et à la périphérie du fond 6 entre un bord inférieur 8A relié au fond 6 d'une part et un bord supérieur 8B libre d'autre part.

Dans les exemples illustrés aux figures, le fond 6 présente une forme sensiblement circulaire et la paroi latérale annulaire supérieure 8 présente elle-même de ce fait une forme de révolution autour d'un axe X-X' passant par le centre du fond 6 et correspondant sensiblement à la direction verticale lorsque le panier 1 se trouve dans sa position fonctionnelle.

Le bord supérieur libre 8B de la paroi latérale annulaire supérieure 8 forme ainsi une ouverture permettant l'introduction des aliments dans le panier 1, au sein d'un récipient d'accueil délimité par le fond 6, et plus précisément par la face supérieure 6B dudit fond 6, d'une part, et par la paroi latérale annulaire supérieure 8 d'autre part. Les aliments reposent ainsi sur le fond 6, lequel est donc conçu pour former une surface de support pour lesdits aliments, y compris lorsque ces derniers se présentent « *en vrac* » (pommes de terre, petits pois, haricots verts, etc.).

Selon l'invention, le panier 1 comprend en outre une paroi latérale annulaire inférieure 9 qui s'étend vers le bas à partir du fond 6, c'est-à-dire en sens inverse du sens d'extension de la paroi latérale annulaire supérieure 8 à partir du fond 6. En d'autres termes, la paroi latérale annulaire supérieure 8 s'élève du coté de la face supérieure 6B du fond 6, tandis que la paroi latérale annulaire inférieure 9 tombe à partir du fond 6 du coté de la face inférieure 6A dudit fond 6. Comme illustré aux figures, la paroi latérale annulaire inférieure 9 s'étend à partir et à la périphérie du fond 6 entre un bord supérieur 9A relié au fond 6 et un bord inférieur 9B libre. De préférence, la paroi latérale annulaire inférieure 9 s'étend dans la continuité de la paroi latérale annulaire supérieure 8. Par exemple, dans le mode de réalisation des figures 1 et 2, le bord supérieur 9A de la paroi latérale annulaire inférieure 9 et le bord inférieur 8A de la paroi annulaire supérieure 8 sont sensiblement confondus ou en tout cas immédiatement adjacents. Avantageusement, la paroi latérale annulaire inférieure 9 présente, tout comme la paroi latérale annulaire supérieure 8, une forme de révolution d'axe X-X'. Ainsi, dans les variantes illustrées aux figures, le panier 1 présente, selon l'axe vertical X-X', une hauteur H qui correspond à la somme de la hauteur h₁ de la paroi latérale annulaire inférieure 9 et de la hauteur h₂ de la paroi latérale annulaire supérieure 8.

Le fond 6 est donc dans ce cas disposé à distance des bords extrémaux du panier 1, lesquels sont respectivement constitués par le bord supérieur 8B libre de la paroi annulaire supérieure 8 et par le bord inférieur 9B libre de la paroi annulaire inférieure 9.

Conformément à l'invention, la paroi latérale annulaire inférieure 9 est conformée pour canaliser la vapeur vers le fond 6. En d'autres termes, la paroi latérale annulaire inférieure 9 est conçue pour diriger la vapeur vers le fond 6, et plus précisément vers la face inférieure 6A dudit fond 6, afin que la vapeur traverse, au cours du cycle de cuisson, ledit fond 6 et se propage parmi, et éventuellement à travers, les aliments 2 disposés sur ledit fond 6. La paroi latérale annulaire inférieure 9 joue ainsi un rôle de tuyère permettant de concentrer la vapeur au coeur de l'amas d'aliments 2, ce qui permet de chasser l'air présent entre les aliments, une telle évacuation de l'air naturellement piégé dans l'amas d'aliments permettant d'accélérer la cuisson tout en préservant les vitamines de l'oxydation. En d'autres termes, la paroi latérale annulaire inférieure 9 guide la vapeur vers le fond 6 pour forcer la vapeur à traverser le fond 6 et l'amas d'aliments 2 supporté par le fond 6, ce qui permet de chasser l'air présent au sein de l'amas aliments 2. Ainsi, la paroi latérale annulaire inférieure 9 est conçue pour canaliser sur sensiblement toute sa hauteur h₁ la vapeur vers le fond 6, en évitant une déperdition latérale significative de la vapeur sur le trajet de hauteur h₁. Ainsi, la paroi latérale annulaire inférieure 9 canalise la vapeur vers une zone du fond qui est perméable à la vapeur (et qui est par exemple perforée ou poreuse), de façon que la vapeur ainsi canalisée traverse au moins localement ledit fond 6. La paroi latérale annulaire inférieure 9 délimite ainsi un volume interne qui accueille et canalise de la vapeur produite lors de la cuisson. De préférence, la hauteur h₁ représente au moins 10 % de la hauteur h₂, afin d'optimiser l'effet de canalisation de vapeur par la paroi latérale annulaire inférieure 9. En outre et de façon éventuellement complémentaire, la hauteur h₁ est au moins égale à 1 cm, et de préférence supérieure ou égale à 2 cm, afin que le contenu du panier (aliments à cuire) soit suffisamment surélevé par rapport au liquide de cuisson, la paroi latérale inférieure 9 jouant donc également dans ce cas un rôle de rehausseur permettant de maintenir au moins partiellement les aliments sensiblement hors de contact de l'eau de cuisson contenu dans la cuve de l'autocuiseur. Dans ce cas, la hauteur h₁ représente avantageusement au moins 4% du diamètre D1 du bord inférieur libre 9B, et de façon encore plus préférentielle au moins 8 % dudit diamètre D1.

Afin de canaliser la vapeur, la paroi latérale annulaire inférieure 9 est avantageusement sensiblement imperméable à la vapeur. Par exemple, la paroi latérale annulaire inférieure 9 est avantageusement sensiblement pleine, c'est-à-dire qu'elle est dénuée de toute porosité ou perforation susceptible d'entraîner une déperdition latérale significative de vapeur à travers la paroi latérale annulaire inférieure 9.

Par exemple, la paroi latérale annulaire inférieure 9 est réalisée en un matériau rigide, tel qu'un matériau métallique du genre acier inoxydable, étant entendu que le recours à tout autre matériau, et par exemple à un matériau plastique, est tout à fait envisageable.

La paroi annulaire supérieure 8 s'inscrit dans un cylindre fictif C dont la génératrice est le bord inférieur libre 9B de la paroi latérale annulaire inférieure 9 (cf. figure 6). En d'autres termes, dans les exemples de réalisation illustrés aux figures, le diamètre D1 de la paroi latérale annulaire inférieure 9 au niveau de son bord inférieur libre 9B est supérieur au plus grand diamètre D2 de la paroi latérale annulaire supérieure 8, de sorte que cette dernière est sensiblement entièrement contenue dans le cylindre fictif C.

De préférence et comme illustré aux figures, le périmètre du bord inférieur libre 9B de la paroi latérale annulaire inférieure 9 est ainsi sensiblement supérieur ou égal à celui du bord supérieur 9A de cette même paroi latérale annulaire inférieure 9. En d'autres termes, la paroi latérale inférieure 9 présente un profil divergent vers le bas à partir du fond 6.

Avantageusement, et comme illustré aux figures 1, 2 et 5 à 7, la paroi latérale annulaire inférieure 9 s'évase, de préférence progressivement, vers le bas à partir de son bord supérieur 9A jusqu'à son bord inférieur libre 9B. La paroi latérale annulaire inférieure 9 affecte dans ce cas une forme de pavillon. Par exemple, la paroi annulaire inférieure peut affecter une forme sensiblement tronconique, comme illustré aux figures 1 et 5, éventuellement prolongée, au niveau du bord libre 9B, d'un rebord droit cylindrique comme illustré à la figure 1. Il est cependant tout à fait envisageable que la paroi latérale annulaire inférieure 9 affecte plutôt un profil courbe, comme dans les figures 6 et 7, sans pour autant que l'on sorte du cadre de l'invention.

Avantageusement, la paroi latérale annulaire supérieure 8 est quant à elle sensiblement cylindrique, comme illustré aux figures 1, 2 et 5, ou du moins légèrement évasée vers le haut à partir du fond 6, comme illustré aux figures 6 et 7, sans pour autant que le diamètre de son bord supérieur libre 8B n'excède celui du bord inférieur libre 9B de la paroi latérale annulaire inférieure 9. Une telle géométrie permet de diriger et concentrer la vapeur vers le fond 6, de façon à forcer cette dernière à traverser le fond 6 et chasser l'air piégé au sein des aliments 2 à cuire, l'air ainsi chassé hors des aliments venant se concentrer dans une zone latérale annulaire 10, matérialisée par des pointillés sur la figure 2. Afin de maintenir cet air éloigné des aliments, ce qui est important eu égard à la nature d'isolant thermique de l'air, la paroi latérale annulaire supérieure 8 est elle-même sensiblement imperméable au gaz, c'est-à-dire qu'elle est de préférence non poreuse et dépourvue de perforations qui pourraient établir une communication entre l'intérieur du panier et l'extérieur à travers l'épaisseur de la paroi latérale annulaire supérieure 8. Bien entendu, une imperméabilité absolue et parfaite n'est pas forcément requise pour la paroi latérale annulaire supérieure 8, l'essentiel étant que cette dernière assure suffisamment un rôle de barrière à l'air stocké dans la zone annulaire 10 latérale, située à l'extérieur du panier au droit des parois latérales annulaires supérieure 8 et inférieure 9, comme illustré à la figure 2. Le même constat vaut bien entendu pour la paroi latérale annulaire inférieure 9, dont le degré de perméabilité à la vapeur doit simplement être suffisamment faible pour empêcher une déperdition latérale significative de vapeur, qui empêcherait de concentrer le flux de vapeur vers et à travers le fond 6. Le caractère imperméable de la paroi annulaire supérieure 8 et/ou de la paroi latérale annulaire inférieure 9 permet en outre d'empêcher que la vapeur présente à l'intérieur du panier ne vienne repousser l'air contenu dans la zone annulaire latérale 10 hors de cette dernière, ce qui perturberait défavorablement le processus de cuisson.

Avantageusement, le panier 1 est conçu pour être posé sur un support, lequel est constitué de préférence par la paroi inférieure 3A d'un appareil de cuisson 3. A cette fin, la paroi latérale annulaire inférieure 9 est conformée pour assurer un rôle de socle, ou d'embase, pour le panier 1.

La conformation de la paroi latérale annulaire inférieure 9 permet donc audit panier 1 de reposer de façon stable sur un support sensiblement plat, et en particulier sur une paroi inférieure 3A d'un appareil de cuisson 3, comme illustré à la figure 2. Ainsi, la paroi latérale annulaire inférieure 9 assure avantageusement une double fonction, savoir d'une part une fonction de canalisation de la vapeur vers le fond 6 et d'autre part une fonction d'embase permettant au panier 1 de reposer de façon stable sur une surface de support. Il n'est donc plus nécessaire, avec le panier 1 conforme à l'invention, de prévoir un système particulier au niveau de l'appareil de cuisson 3 permettant le maintien en position du panier 1. La paroi latérale annulaire inférieure 9 permet en outre de maintenir le fond 6 à distance de la paroi inférieure 3A de l'appareil de cuisson, ce qui permet d'éviter que les aliments 2 ne soient immergés dans un éventuel liquide de cuisson 11 présent dans l'appareil de cuisson 3, pour autant que l'utilisateur se soit assuré que le niveau de liquide de cuisson 11 n'excède pas la hauteur h₁ de la paroi latérale annulaire inférieure 9. Avantageusement, le bord inférieur libre 9B de la paroi latérale annulaire inférieure 9 s'inscrit sensiblement, de préférence intégralement, dans un plan, de façon à procurer au panier 1 un appui annulaire plan qui est non seulement stable mais permet en outre de créer une zone fermée délimitée par la paroi inférieure 3A de l'appareil de cuisson 3, la paroi latérale annulaire inférieure 9 et le fond 6, la vapeur produite dans cet espace fermé ne pouvant que s'échapper par le fond 6, qui est perméable à la vapeur.

Dans une variante particulièrement avantageuse qui est illustré à la figure 2, le panier 1 de cuisson d'aliments est un panier pour un appareil de cuisson 3 comprenant une paroi inférieure 3A contre laquelle le panier 1 est destiné à reposer, les forme et périmètre du bord inférieur libre 9B de la paroi latérale annulaire inférieure 9 étant sensiblement ajustés aux forme et périmètre de la périphérie de ladite paroi inférieure 3A de l'appareil 3, comme illustré à la figure 2.

Une telle conformation du panier 1 en relation avec l'appareil de cuisson 3 avec lequel il est destiné à être utilisé permet non seulement un positionnement autocentré du panier 1 dans l'appareil de cuisson 3, mais également et surtout de capturer sensiblement la totalité de la vapeur susceptible d'être produite par le chauffage du liquide de cuisson 11 recouvrant la paroi inférieure 3A, la vapeur en question étant ainsi concentrée vers le fond 6 pour traverser ce dernier et expulser l'air piégé parmi les aliments 2.

Dans les variantes des figures 1, 2 et 5, le panier 1 constitue un ensemble d'un seul tenant, monobloc, c'est-à-dire que la paroi latérale annulaire supérieure 8, le fond 6 et la paroi latérale annulaire inférieure 9 sont fixés de façon permanente les uns aux autres, par exemple par des opérations de soudure ou tout autre procédé d'assemblage mécanique. A cet égard, il est par exemple envisageable que la paroi latérale annulaire supérieure 8 et le fond 6 soient formés d'une pièce d'un seul tenant, la paroi latérale annulaire inférieure 9 étant rapportée et emmanchée à force, éventuellement par l'intermédiaire d'un joint d'étanchéité à la vapeur, sur le sous-ensemble formé par la paroi latérale annulaire supérieure 8 et le fond 6, comme illustré à la figure 6. Un tel montage peut d'ailleurs tout à fait être effectué par l'utilisateur final lui-même, une fois le panier acheté. Cette configuration en deux parties monoblocs présente également un intérêt en termes de stockage et de transport. En effet, si, comme illustré à la figure 6, la paroi latérale annulaire supérieure 8 est sensiblement évasée vers le haut, alors il est possible d'empiler de façon stable et compacte une pluralité de sous-ensembles monoblocs constitués par la paroi latérale annulaire supérieure 8 et le fond 6. De la même façon, il est possible parallèlement d'empiler, du fait de leur caractère évasé, les pièces monoblocs formant la paroi latérale annulaire inférieure 9.

Ceci permet un gain de place pour le stockage et le transport, jusqu'au montage final qui peut être effectué, comme évoqué précédemment, par le consommateur.

Dans un autre mode de réalisation, illustré à la figure 7, les parois latérales annulaires supérieure 8 et inférieure 9 forment cette fois une pièce monobloc d'un seul tenant, ladite pièce monobloc présentant par exemple une forme de tube doublement évasé s'apparentant à celle d'une hyperboloïde de révolution à une nappe. Une grille indépendante formant le fond 6 est ensuite rapportée, éventuellement par l'utilisateur final, et est montée à l'intérieur du tube doublement évasé formant les parois latérales annulaires supérieure 8 et inférieure 9. Le maintien en position du fond 6 est obtenu à l'aide d'une rainure de blocage ou de tout autre moyen (joint souple par exemple) disposé sur la face interne du tube précité, à l'interface entre les parois latérales annulaires supérieure 8 et inférieure 9, comme illustré à la figure 7. Dans ce mode de réalisation, il est d'ailleurs tout à fait envisageable que le fond 6 présente un caractère amovible, c'est-à-dire qu'il puisse être mis en place et enlevé à volonté par l'utilisateur, ce dernier disposant éventuellement d'un jeu 12 de plusieurs fonds 6 différents, se distinguant par exemple par la distribution et/ou la taille des perforations 7, ainsi que par le caractère incurvé ou non du fond 6. Cette conception particulière permet en outre de séparer l'opération de fabrication du fond 6 de celle des autres éléments constituant le panier 1. Cette fabrication séparée autorise ainsi une grande liberté dans le choix des formes et matériaux du fond 6A, lequel peut par exemple être compartimenté pour accueillir des aliments de natures différentes sans qu'ils ne se mélangent, ou être pourvu de supports destinés par exemple à coopérer avec des récipients amovibles (ramequins ou autre) conçus pour être attachés temporairement au fond 6 le temps de la cuisson. Une telle conception à fond séparé constitue d'ailleurs une invention en tant que telle, indépendamment des autres aspects inventifs décrits ici.

Dans tous les cas, il est avantageux de munir le panier 1 d'une anse de préhension rabattable (non représentée), fixée par exemple vers le bord supérieur libre 8B de la paroi latérale annulaire supérieure 8.

L'invention concerne par ailleurs de façon indépendante un système de cuisson, illustré à la figure 2, comprenant d'une part un appareil de cuisson 3 conçu pour cuire des aliments dans une atmosphère chargée en vapeur, ledit appareil 3 étant de préférence un autocuiseur, et d'autre part un panier 1 de cuisson d'aliments conforme à l'invention.

Le panier 1 du système précité est donc conforme à la description qui précède.

De préférence, l'appareil de cuisson 3 comprend une cuve 5 destinée à être fermée par un couvercle 4, ladite cuve 5 comprenant donc une paroi inférieure 3A, de préférence sensiblement discoïde, à partir et à la périphérie de laquelle s'élève une paroi latérale 3B pourvue d'un bord libre définissant une ouverture permettant d'accéder à l'intérieur de la cuve 5, laquelle présente de préférence une forme de révolution d'axe confondu avec l'axe X-X' lorsque le panier 1 est en position fonctionnelle. Le panier 1 est préférentiellement conçu pour être introduit à l'intérieur de ladite cuve 5, par l'ouverture en question, en vue de reposer, par l'intérieur de la cuve 5, sur la paroi inférieure 3A, comme illustré à la figure 2. Avantageusement, et comme déjà évoqué dans ce qui précède, les formes et périmètres du bord inférieur libre 9B de la paroi latérale annulaire inférieure 9 sont sensiblement ajustés aux forme et périmètre de la périphérie de ladite paroi inférieure 3A (cf. figure 2). Cela signifie que le jeu J existant entre la paroi latérale annulaire inférieure 9 et la paroi latérale 3B de la cuve est avantageusement réduit à une valeur minimale permettant le glissement autocentré du panier 1 à l'intérieur de la cuve 5, laquelle présente une section sensiblement conjuguée au bord libre 9B de la paroi latérale annulaire inférieure 9. Le caractère évasé de la paroi latérale inférieure 9 permet par ailleurs de délimiter les zones 10 de stockage de l'air chassé entre d'une part la paroi latérale 3B de la cuve 5 et d'autre part les faces externes des parois latérales annulaires supérieure 8 et inférieure 9 du panier 1. L'air piégé dans l'amas d'aliments 2 peut être ainsi chassé dans une zone 10 neutre, c'est-à-dire située en dehors de la zone de cuisson principale, évitant ainsi de perturber la cuisson.

Un exemple de fonctionnement d'un système de cuisson conforme à l'invention est exposé dans ce qui suit. L'utilisateur introduit tout d'abord dans la cuve 5 de l'appareil de cuisson 3, lequel est constitué en l'espèce par un autocuiseur, un volume d'eau 11 choisi pour que la hauteur h₃ d'eau à partir de la paroi inférieure 3A n'excède pas la hauteur h₁ de la paroi latérale annulaire inférieure 9 du panier 1. L'utilisateur introduit ensuite des aliments 2 dans le panier 1, sur la face supérieure 6B du fond 6. Le panier 1 ainsi chargé en aliments 2 est alors introduit dans la cuve 5, jusqu'à ce que le bord inférieur 9B libre de la paroi latérale annulaire inférieure 9 vienne en appui sur et contre la paroi inférieure 3A de la cuve 5. La forme du bord libre 9B étant ajustée à celle de la paroi inférieure 3A, la paroi latérale annulaire inférieure 9 coiffe donc sensiblement intégralement ladite paroi inférieure 3A, et donc l'eau 11 disposée sur la paroi inférieure 3A. Le couvercle 4 est ensuite rapporté et verrouillé sur la cuve 5, par exemple à l'aide d'un système à mâchoires 4A. L'enceinte de cuisson étanche (présence d'un joint 4B entre le couvercle 4 et la cuve 5) ainsi formée, qui contient le panier 1 lequel contient lui-même les aliments 2, est alors placée sur une source de chauffe (plaque de cuisson). Sous l'effet du chauffage, l'eau 11 monte en température puis rentre en ébullition, ce qui génère de la vapeur. Dans la mesure où le diamètre D1 du bord inférieur libre 9B est seulement très légèrement inférieur au diamètre de la paroi inférieure 3A, au jeu J près, l'essentiel de la vapeur produite par la mise en ébullition de l'eau 11 est capturé entre la paroi latérale annulaire inférieure 9, la paroi inférieure 3A et le fond 6. La majeure partie, voire sensiblement la totalité de la vapeur ainsi produite, est ainsi canalisée par la paroi latérale annulaire inférieure 9 vers le fond 6, et traverse ledit fond 6 par les orifices 7 dont ce dernier est muni. Grâce à ce flux massif de vapeur, obtenu grâce à l'effet de canalisation de la paroi latérale annulaire inférieure 9, l'air habituellement piégé entre les aliments 2, au sein de l'amas d'aliments 2, est chassé par la vapeur vers le haut, canalisé par la paroi latérale annulaire supérieure 8.

Cet air va ensuite s'accumuler dans la zone annulaire périphérique 10 délimitée par la paroi latérale 3B de la cuve 5 d'une part et les faces externes des parois latérales annulaires inférieure 9 et supérieure 8 du panier 1. Ainsi, la zone dans laquelle les aliments 2 à cuire sont positionnés est débarrassée de l'effet d'isolation thermique dû à l'air, ce qui permet d'atteindre très rapidement la température maximale de cuisson au coeur de l'amas d'aliments 2. Grâce à cette plus grande rapidité de cuisson, obtenue en chassant de manière particulièrement efficace et rapide l'air en début de processus de cuisson, une grande quantité de vitamines est préservée, et la source de chauffe peut être coupée plus tôt que dans les appareils de l'art antérieur. Bien entendu, l'air chassé de l'amas d'aliments 2 pourrait être évacué en début de cuisson par l'intermédiaire d'un système de purge (soupape de purge), voire par la soupape de régulation de l'autocuiseur. Quoiqu'il en soit, si la totalité de l'air chassé par la vapeur hors des aliments 2 n'est pas évacuée par la purge ou la soupape de régulation, ce dernier viendra s'accumuler dans la zone 10 comme exposé précédemment.

Les avantages du panier 1 et du système de cuisson correspondant conformes à l'invention peuvent être quantifiés de deux manières, liées l'une à l'autre :
- gain en temps de cuisson, car la température maximale de cuisson à coeur de l'amas d'aliments 2 est atteinte plus vite, pour les raisons exposées dans ce qui précède ;
- gain en préservation vitaminique, car les vitamines sensibles (vitamine C par exemple) sont moins soumises au phénomène d'oxydation (l'air étant chassé comme exposé précédemment) et à l'effet destructeur de la température de cuisson (le temps de cuisson est raccourci puisque la température maximale de cuisson à coeur de l'amas d'aliments 2 est atteinte plus vite).

La demanderesse a réalisé des essais de cuisson de brocolis et de haricots verts, aliments que l'on cuit en amas et qui sont donc susceptibles de piéger de l'air pendant la cuisson. Les essais effectués ont consisté à effectuer un cycle de cuisson dans un même autocuiseur dont la pression de fonctionnement était fixée à 54 kPa, à l'aide d'une part d'un panier 1 conforme à l'invention, dans une variante correspondant à la figure 1, et d'autre part d'un panier témoin de l'art antérieur. L'autocuiseur utilisé pour ces essais était en outre équipé d'un système de purge favorisant l'évacuation de la vapeur d'eau hors de l'enceinte de l'autocuiseur lors de la montée en pression. Le panier de l'art antérieur formant panier témoin présente quant à lui une conception identique à celle du panier décrit dans le document FR-2 832 613, à la seule différence que l'essentiel des perforations de son fond ont été supprimées, de façon que ledit fond soit sensiblement plein, seule une couronne périphérique étroite dudit fond restant perforée, de même que la paroi latérale du panier. Dans une première série d'essais, une cuisson de 400 g de haricots verts a été réalisée avec le panier 1 conforme à l'invention et avec le panier témoin décrit dans ce qui précède, dans un même autocuiseur avec une pression de fonctionnement réglée à 54 kPa. Alors que le temps de cuisson avec le panier témoin a été d'environ 6 min et 30 s, le temps de cuisson avec le panier 1 conforme à l'invention a été ramené à 5 min et 15 s, soit un gain d'environ 20 %. Des essais similaires menés cette fois avec 400 g de brocolis, permettent de constater un gain d'environ 17 % en matière de durée de cuisson, le panier 1 conforme à l'invention permettant de cuire en 2 min et 30 s contre 3 min dans le panier témoin. Par ailleurs, alors que 55 % de la vitamine C des haricots verts cuits dans le panier témoin est préservé, cette teneur monte à 62 % pour les haricots verts cuits dans le panier 1 conforme à l'invention, soit un gain supérieur à 6 %.

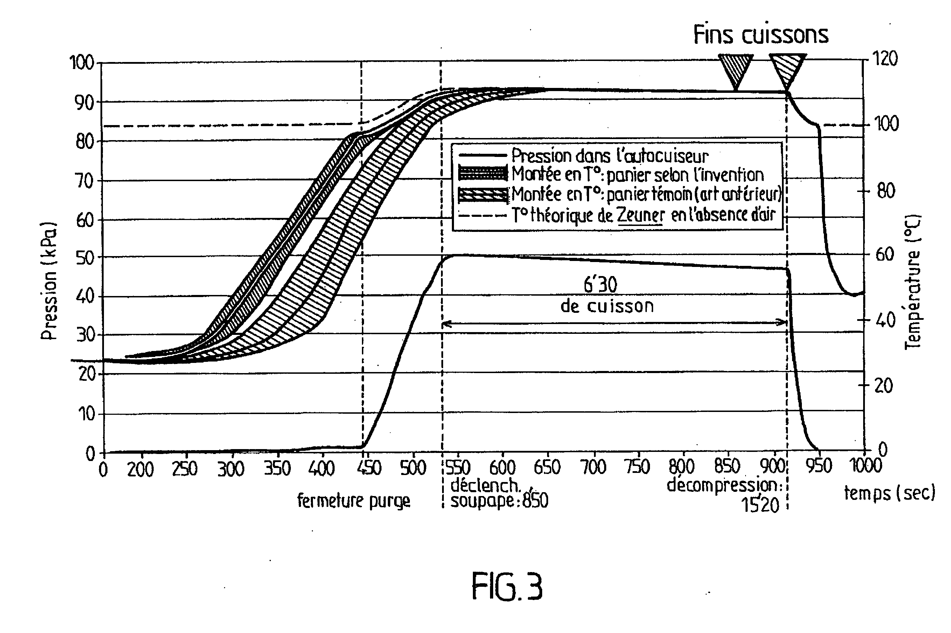

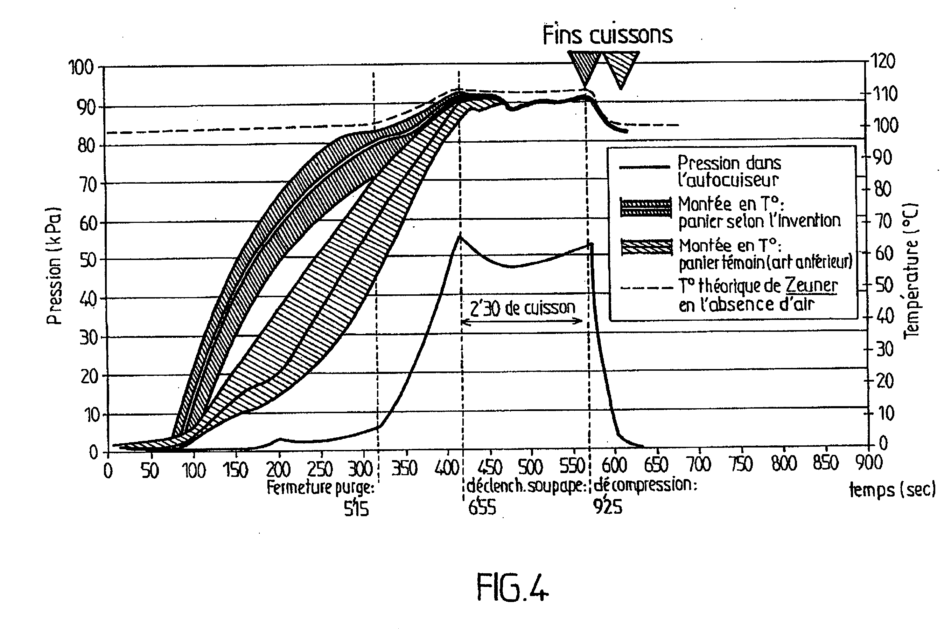

Des relevés de pression de température, correspondants aux graphes des figures 3 et 4, ont également été effectués pendant ces tests pour confirmer une atteinte de température de cuisson plus rapide dans le nouveau panier 1 conforme à l'invention. Ainsi, les graphes des figures 3 et 4 contiennent les informations suivantes, respectivement pour la cuisson de 400 g de haricots verts et de 400 g de brocolis dans un autocuiseur dont la pression de fonctionnement est réglée à 54 kPa :
- évolution de la température à l'intérieur de l'enceinte de cuisson en fonction du temps lorsque les aliments sont placés dans le panier témoin ; cette température à coeur est mesurée en plusieurs points du amas d'aliments (haricots verts ou brocolis selon le cas) de sorte que la variation de la température à coeur est illustrée par un fuseau, qui est en l'espèce hachuré ;
- évolution de la température à l'intérieur de l'enceinte de cuisson en fonction du temps lorsque les aliments sont placés dans le panier 1 conforme à l'invention ; cette température à coeur est mesurée en plusieurs points du amas d'aliments (haricots verts ou brocolis selon le cas) de sorte que la variation de la température à coeur est illustrée par un fuseau, qui est en l'espèce hachuré de façon plus dense que le fuseau du panier témoin ;
- évolution de la température de Zeuner (en traits pointillés), c'est-à-dire de la température théorique d'ébullition de l'eau 11 en fonction de la pression, en l'absence d'air ;
- fin de la cuisson dans le panier 1 conforme à l'invention et dans le panier témoin, cette fin de cuisson étant déterminée par des tests de tendreté classiques ;
- et évolution de la pression (en traits pleins) régnant dans l'enceinte de cuisson en fonction du temps.

Les graphes des figures 3 et 4 montrent ainsi que le fuseau (plein) de toutes les températures relevées au coeur du amas de haricots verts ou de brocolis est en avance par rapport au fuseau (hachuré) de températures obtenu avec le panier témoin, le fuseau plein de température obtenu avec le panier 1 conforme à l'invention étant en outre plus proche de la courbe de température Zeuner. Cette avance de montée en température obtenue avec le panier 1 conforme à l'invention permet d'atteindre plus vite la fin de cuisson et de mieux préserver les vitamines. Ces résultats attestent donc de l'efficacité du panier 1 de cuisson selon l'invention en terme de réduction du temps de cuisson et donc en termes de préservation des vitamines. Bien entendu, les résultats quantitatifs dépendent de l'aliment considéré. Pour des aliments dont les vitamines sont particulièrement exposées, des résultats encore plus prononcés pourraient être observés.

Enfin, la demanderesse a constaté que l'efficacité du panier 1 conforme à l'invention peut être encore accentuée en augmentant le volume de la zone neutre 10, ce qui entraîne toutefois une réduction de la capacité du panier. Cependant, pour une faible quantité d'aliments, un panier 1 conforme à la variante de la figure 5, c'est-à-dire présentant une paroi latérale annulaire supérieure 8 dont la section est nettement réduite par rapport à la section définie par le bord inférieur libre 9B de la paroi latérale annulaire inférieure 9 permet d'obtenir d'excellents résultats en matière de rapidité de cuisson et de préservation des vitamines.

Bien entendu, les conformations spécifiques correspondant aux exemples illustrés aux figures ne sont pas les seules envisageables, le seul impératif à respecter étant de guider la majeure partie, et de préférence la quasi-totalité voire la totalité de la vapeur à travers les aliments, et de laisser avantageusement libre une zone 10 où l'air restant pourra être rassemblé sans contact avec les aliments à cuire.

Il est par ailleurs également envisageable, dans une variante non représentée, que le panier 1 puisse faire office d'accessoire de table en lui adjoignant une coupelle destinée à venir se fixer sur le bord inférieur libre 9B de la paroi latérale annulaire inférieure 9, ladite coupelle étant ainsi destinée à recevoir le jus de l'égouttage des aliments contenus dans le panier 1. Le panier 1 pourrait ainsi être amené sur la table sans risquer de mouiller cette dernière.

En définitive, le panier 1 conforme à l'invention permet une cuisson plus rapide de la majorité des aliments généralement cuits à la vapeur, en autocuiseur ou dans tout autre appareil de cuisson vapeur. Il permet une moindre oxydation des vitamines, qui restent présentes dans l'aliment en plus grande quantité qu'avec tout autre panier connu à niveau de cuisson équivalent. La source de chauffe peut être aussi arrêtée plus tôt, ce qui permet une moindre consommation d'énergie pour la cuisson.

## Revendications

1. Panier (1) de cuisson d'aliments (2) pour appareil de cuisson (3) conçu pour cuire les aliments (2) dans une atmosphère chargée en vapeur, ledit panier (1) comprenant un fond (6) perméable à la vapeur et une paroi latérale annulaire supérieure (8) s'étendant vers le haut à partir dudit fond (6) pour former avec ce dernier un récipient d'accueil desdits aliments (2), ledit panier (1) étant **caractérisé en ce qu'**il comprend en outre une paroi latérale annulaire inférieure (9) s'étendant vers le bas à partir dudit fond (6) entre un bord supérieur (9A) relié audit fond (6) et un bord inférieur libre (9B), ladite paroi latérale annulaire inférieure (9) étant conformée pour canaliser la vapeur vers ledit fond (6) afin que la vapeur ainsi canalisée traverse au moins localement ledit fond (6), ladite paroi annulaire supérieure (8) s'inscrivant dans un cylindre fictif (C) dont la génératrice est ledit bord inférieur libre (9B) de la paroi latérale annulaire inférieure (9).

2. Panier (1) selon la revendication 1 **caractérisé en ce que** le périmètre dudit bord inférieur libre (9B) est sensiblement supérieur ou égal à celui dudit bord supérieur (9A).

3. Panier (1) selon la revendication 1 ou 2 **caractérisé en ce que** ladite paroi latérale annulaire inférieure (9) s'évase vers le bas à partir de son bord supérieur (9A) jusqu'à son bord inférieur libre (9B).

4. Panier (1) selon l'une des revendications 1 à 3 **caractérisé en ce que** ledit bord inférieur libre (9B) s'inscrit sensiblement dans un plan.

5. Panier (1) selon l'une des revendications 1 à 4 **caractérisé en ce que** ledit appareil de cuisson (3) comprend une paroi inférieure contre laquelle le panier (1) est destiné à reposer, les forme et périmètre dudit bord inférieur libre (9B) étant sensiblement ajustés aux forme et périmètre de la périphérie de ladite paroi inférieure.

6. Panier (1) selon l'une des revendications 1 à 5 **caractérisé en ce que** ladite paroi latérale annulaire inférieure (9) est sensiblement pleine.

7. Panier (1) selon l'une des revendications 1 à 6 **caractérisé en ce que** ladite paroi annulaire supérieure (8) est sensiblement pleine.

8. Panier (1) selon l'une des revendications 1 à 7 **caractérisé en ce que** le fond (6) est pourvu de perforations (7).

9. Panier (1) selon l'une des revendications 1 à 8 **caractérisé en ce que** la paroi latérale annulaire inférieure (9) est conformée pour assurer un rôle de socle pour le panier (1).

10. Panier (1) selon l'une des revendications 1 à 9 **caractérisé en ce qu'**il constitue un panier (1) pour autocuiseur.

11. Système de cuisson comprenant d'une part un appareil de cuisson (3) conçu pour cuire des aliments (2) dans une atmosphère chargée en vapeur et d'autre part un panier (1) de cuisson d'aliments comprenant un fond (6) perméable à la vapeur et une paroi latérale annulaire supérieure (8) s'étendant vers le haut à partir dudit fond (6) pour former avec ce dernier un récipient d'accueil desdits aliments (2), ledit système étant **caractérisé en ce que** ledit panier (1) comprend en outre une paroi latérale annulaire inférieure (9) s'étendant vers le bas à partir dudit fond (6) entre un bord supérieur (9A) relié audit fond (6) et un bord inférieur libre (9B), ladite paroi latérale annulaire inférieure (9) étant conformée pour canaliser la vapeur vers ledit fond (6) afin que la vapeur ainsi canalisée traverse au moins localement ledit fond (6), ladite paroi annulaire supérieure (8) s'inscrivant dans un cylindre fictif (C) dont la génératrice est ledit bord inférieur libre (9B) de la paroi latérale annulaire inférieure (9).

12. Système de cuisson selon la revendication 11 **caractérisé en ce que** ledit appareil de cuisson (3) comprend une paroi inférieure (3A) contre laquelle le panier (1) est destiné à reposer, les forme et périmètre dudit bord inférieur libre (9B) étant sensiblement ajustés aux forme et périmètre de la périphérie de ladite paroi inférieure (3A).

13. Systéme selon la revendication 11 ou 12 **caractérisé en ce que** l'appareil de cuisson (3) est conçu pour former une enceinte de cuisson destinée à contenir ledit panier (1).

14. système selon l'une des revendications 11 à 13 **caractérisé en ce que** ledit appareil de cuisson (3) est un autocuiseur.

## Patentansprüche

1. Kochbehälter (1) für Nahrungsmittel (2) für ein Kochgerät (3) zum Kochen der Nahrungsmittel (2) in einer mit Dampf beaufschlagten Atmosphäre, wobei der Behälter (1) einen für den Dampf durchlässigen Boden (6) und eine obere ringförmige Seitenwand (8) umfasst, die sich nach oben vom Boden (6) ausgehend erstreckt, um mit diesem letztgenannten ein Gehäuse zur Aufnahme der Nahrungsmittel (2) zu bilden, wobei der Behälter (1) **dadurch gekennzeichnet ist, dass** er ferner eine untere ringförmige Seitenwand (9) umfasst, die sich nach unten vorn Boden (6) zwischen einem oberen Rand (9A), der mit dem Boden (6) verbunden ist, und einem freien unteren Rand (9B) erstreckt, wobei die untere ringförmige Seitenwand (9) derart ausgeführt ist, dass sie den Dampf zum Boden (6) lenkt, damit der so gelenkte Dampf zumindest lokal durch den Boden (6) hindurchgeht, wobei die obere ringförmige Wand (8) in einen fiktiven Zylinder (C) eingeschrieben ist, dessen Generator der freie untere Rand (9B) der unteren ringförmigen Seitenwand (9) ist.

2. Behälter (1) nach Anspruch 1, **dadurch gekennzeichnet, dass** der Umfang des freien unteren Randes (9B) im Wesentlichen größer oder gleich jenem des oberen Randes (9A) ist.

3. Behälter (1) nach Anspruch 1 oder 2, **dadurch gekennzeichnet, dass** sich die untere ringförmige Wand (9) nach unten von ihrem oberen Rand (9A) ausgehend bis zu ihrem freien unteren Rand (9B) erweitert.

4. Behälter (1) nach einem der Ansprüche 1 bis 3, **dadurch gekennzeichnet, dass** der freie untere Rand (9B) im Wesentlichen in eine Ebene eingeschrieben ist.

5. Behälter (1) nach einem der Ansprüche 1 bis 4, **dadurch gekennzeichnet, dass** das Kochgerät (3) eine untere Wand umfasst, an der der Behälter (1) anliegen soll, wobei die Form und der Umfang des freien unteren Randes (9B) im Wesentlichen an die Form und den Umfang der Peripherie der unteren Wand angepasst sind.

6. Behälter (1) nach einem der Ansprüche 1 bis 5, **dadurch gekennzeichnet, dass** die untere ringförmige Wand (9) im Wesentlichen voll ist.

7. Behälter (1) nach einem der Ansprüche 1 bis 6, **dadurch gekennzeichnet, dass** die obere ringförmige Wand (8) im Wesentlichen voll ist.

8. Behälter (1) nach einem der Ansprüche 1 bis 7, **dadurch gekennzeichnet, dass** der Boden (6) mit Perforationen (7) versehen ist.

9. Behälter (1) nach einem der Ansprüche 1 bis 8, **dadurch gekennzeichnet, dass** die untere ringförmige Seitenwand (9) derart ausgeführt ist, dass sie die Rolle eines Sockels für den Behälter (1) erfüllt.

10. Behälter (1) nach einem der Ansprüche 1 bis 9, **dadurch gekennzeichnet, dass** er einen Behälter (1) für einen Druckkochtopf darstellt.

11. Kochsystem, umfassend einerseits ein Kochgerät (3) für Nahrungsmittel (2) in einer mit Dampf beaufschlagten Atmosphäre und andererseits einen Behälter (1) zum Kochen von Nahrungsmitteln, umfassend einen für den Dampf durchlässigen Boden (6) und eine obere ringförmige Seitenwand (8), die sich nach oben vom Boden (6) ausgehend erstreckt, um mit diesem letztgenannten ein Gehäuse zur Aufnahme der Nahrungsmittel (2) zu bilden, wobei das System **dadurch gekennzeichnet ist, dass** der Behälter (1) ferner eine untere ringförmige Seitenwand (9) umfasst, die sich nach unten vom Boden (6) zwischen einem oberen Rand (9A), der mit dem Boden (6) verbunden ist, und einem freien unteren Rand (9B) erstreckt, wobei die untere ringförmige Seitenwand (9) derart ausgeführt ist, dass sie den Dampf zum Boden (6) lenkt, damit der so gelenkte Dampf zumindest lokal durch den Boden (6) hindurchgeht, wobei die obere ringförmige Wand (8) in einen fiktiven Zylinder (C) eingeschrieben ist, dessen Generator der freie untere Rand (9B) der unteren ringförmigen Seitenwand (9) ist.

12. Kochsystem nach Anspruch 11, **dadurch gekennzeichnet, dass** das Kochgerät (3) eine untere Wand (3A) umfasst, an der der Behälter (1) anliegen soll, wobei die Form und der Umfang des freien unteren Randes (9B) im Wesentlichen an die Form und den Umfang der Peripherie der unteren Wand (3A) angepasst sind.

13. System nach Anspruch 11 oder 12, **dadurch gekennzeichnet, dass** das Kochgerät (3) derart ausgeführt ist, dass es einen Kochraum bildet, der dazu bestimmt ist, den Behälter (1) zu enthalten.

14. System nach einem der Ansprüche 11 bis 13, **dadurch gekennzeichnet, dass** das Kochgerät (3) ein Druckkochtopf ist.

## Claims

1. A basket (1) for cooking food (2) for a cooking utensil (3) designed to cook the food (2) in an atmosphere charged with steam, said basket (1) having a bottom (6) that is permeable to steam and an upper annular side wall (8) extending upwards from said bottom (6) so as to co-operate therewith to form a receptacle for receiving said food (2), said basket being **characterized in that** it further has a lower annular side wall (9) extending downwards from said bottom (6), between a top edge (9A) connected to said bottom (6) and a free bottom edge (9B), said lower annular side wall (9) being shaped to channel the steam towards said bottom (6) so that the steam channeled in this way passes at least locally through said bottom (6), said upper annular wall (8) lying within a cylindrical volume (C) whose generator line is said free bottom edge (9B) of the lower annular side wall (9).

2. A basket (1) according to claim 1, **characterized in that** the perimeter of said free bottom edge (9B) is substantially greater than or equal to the perimeter of said top edge (9A).

3. A basket (1) according to claim 1 or 2, **characterized in that** said lower annular side wall (9) flares going downwards from its top edge (9A) to its free bottom edge (9B).

4. A basket (1) according to any one of claims 1 to 3, **characterized in that** said free bottom edge (9B) lies substantially within a plane.

5. A basket (1) according to any one of claims 1 to 4, **characterized in that** said cooking utensil (3) has a bottom wall against which the basket (1) is designed to rest, the shape and the perimeter of said free bottom edge (9B) substantially matching the shape and the perimeter of the periphery of said bottom wall.

6. A basket (1) according to any one of claims 1 to 5, **characterized in that** said lower annular side wall (9) is substantially uninterrupted.

7. A basket (1) according to any one of claims 1 to 6, **characterized in that** said upper annular wall (8) is substantially uninterrupted.

8. A basket (1) according to any one of claims 1 to 7, **characterized in that** the bottom (6) is provided with perforations (7).

9. A basket (1) according to any one of claims 1 to 8, **characterized in that** the lower annular side wall (9) is shaped to act as a stand or base for the basket (1).

10. A basket (1) according to any one of claims 1 to 9, **characterized in that** it constitutes a basket (1) for a pressure cooker.

11. A cooking system comprising firstly a cooking utensil (3) designed to cook food (2) in an atmosphere charged with steam, and secondly a food-cooking basket (1) having a bottom (6) that is permeable to steam and an upper annular side wall (8) extending upwards from said bottom (6) so as to co-operate therewith to form a receptacle for receiving said food (2), said cooking system being **characterized in that** said basket (1) further comprises a lower annular side wall (9) extending downwards from said bottom (6) between a top edge (9A) connected to said bottom (6) and a free bottom edge (9B), said lower annular side wall (9) being shaped to channel the steam towards said bottom (6) so that the steam channeled in this way passes at least locally through said bottom (6) said upper annular wall (8) lying within a cylindrical volume (C) whose generator line is said free bottom edge (9B) of the lower annular side wall (9).

12. A cooking system according to claim 11, **characterized in that** said cooking utensil (3) comprises a bottom wall (3A) against which the basket (1) is designed to rest, the shape and the perimeter of said free bottom edge (9B) substantially matching the shape and the perimeter of the periphery of said bottom wall (3A).

13. A system according to claim 11 or claim 12, **characterized in that** the cooking utensil (3) is designed to form a cooking enclosure designed to contain said basket (1).

14. A system according to any one of claims 11 to 13, **characterized in that** said cooking utensil (3) is a pressure cooker.
